# EUROPEAN PATENT SPECIFICATION

(11) **EP 2 758 738 B1**
(45) Date of publication and mention of the grant of the patent: **05.09.2018**
(21) Application number: 12783491.9
(22) Date of filing: 20.09.2012
(51) Int. Cl.: F28D 7/02, F24F 12/00, F28F 1/36

(54) **COUNTERFLOW CYLINDRICAL RECUPERATIVE HEAT EXCHANGER WITH MULTI-THREAD SCREW-LIKE COILED HEAT EXCHANGER SURFACES, DESIGNED FOR VENTILATING DEVICES**
ZYLINDRISCHER REKUPERATIVER GEGENSTROM-WÄRMETAUSCHER MIT MEHRADRIGEN, SCHRAUBENFÖRMIGEN UND GEWICKELTEN WÄRMETAUSCHER-OBERFLÄCHEN FÜR BELÜFTUNGSVORRICHTUNGEN
ÉCHANGEUR DE CHALEUR À RÉCUPÉRATION CYLINDRIQUE À ÉCOULEMENT À CONTRE-ÉCOULEMENT DOTÉ DE SURFACES D'ÉCHANGEUR DE CHALEUR ENROULÉES EN FORME DE VIS À FILETAGES MULTIPLES, CONÇU POUR DES DISPOSITIFS DE VENTILATION

(30) Priority: 20.09.2011 CZ 20110583
(43) Date of publication of application: 30.07.2014
(73) Proprietor: 2VV S.r.o., 530 09 Pardubice (CZ)
(72) Inventor: CHLUP, Jaroslav, 53012 Pardubice (CZ)
(74) Representative: Smrckova, Marie
(86) International application number: PCT/CZ2012/000095
(87) International publication number: WO 2013/041066

(56) References cited:
- EP-A1- 0 037 790
- EP-A2- 2 192 367
- WO-A1-2008/052493
- DE-A1- 3 013 374
- DE-A1-102005 035 712
- GB-A- 2 374 661
- US-A- 4 653 574

## Description

### Technical Field

The invention concerns a recuperative counterflow cylindrical heat exchanger with multi-thread screw-like coiled heat exchanger surfaces, designed especially for ventilating devices. The recuperative heat exchanger includes the inlet and outlet of of mediums, and an external pipe with the coaxially arranged internal pipe, between which heat exchanger surfaces of a screw-like shape are situated. The distributors for inlet and outlet of mediums are situated on both the ends of the recuperative heat exchanger. If the flow directions are inversed, the inlets of the medium become the outlets of the medium and the outlets of the medium become the inlets of the medium. The helix of the heat-exchanger surface is right-handed or left-handed and is coiled under the pitch angle, which is greater than 0° and smaller than 90° with regard to the longitudinal axis of the recuperative heat exchanger.

### Background of the Invention

CS AO 273 429 (1988) states a helix-type heat exchanger, where the helical heating channel outlines the heating channel in the cover, which is attached on the bearing plate (in a removable way) of the base of the heat exchanger body. The heating channel is formed of a couple of plates, attached along the central closed bearing column with overlapping against themselves, in a direction perpendicular towards its opposite parallel walls, and mutually interconnected oblique wings, at the external edge connected with a circumferential belt, sealed with regard to the internal area of the cover. The heating channel is connected to the intermediate space of the bearing column. This exchanger is intended especially for the heating of sludge in waste water treatment plants. The heating channel has a heat-exchange surface corresponding to the helical area, arranged around the longitudinal axis of the heat exchanger. The arrangement of the helix-type heat exchanger can be dismantled and is provided with sealing, which means that a good access to sludge channels is facilitated and it is possible to easily clean them. A central pipe is used for the inlet and outlet of the medium. The flowing of both the mediums in the counterflow is arranged basically in a spiral, which is not smooth, but is broken from one plate thread to another one. A disadvantage is that the matter concerns a single one-thread helix. The design solution is relatively very complicated and requires multiple parts. This involves a compromise between a pressure loss and thermal efficiency, which is obviously required for the given case of the sludge cleaning.

EP 411 404 A1 states a counterflow heat exchanger, formed of two cylindrical pipes, one of which being provided with ribs coiled into a helix, the other one being smooth. One medium passes in one direction axially; the other medium has a movement trajectory along the helix between ribs. An advantage stated in the description of the invention is, that the shell pipe is a shrinking hose which is able to seal the helix channels quite well. This solution is especially suitable for viscous liquids, such as oil, petrol, blood and similar liquids. A disadvantage of this solution is that the matter concerns a single-thread exchanger.

EP 224 838 (1985) describes a heat exchanger consisting of two coaxial cylinders, between which heat-exchange plates featuring a spiral shape are situated. The heat-exchange plates are connected on the external and on the internal diameters, which means that in the longitudinal section the channels feature a triangular shape. The heat exchanger works in a counterflow, in such a manner, that the medium flows in a helix. The description states, that inlets and outlets for mediums are surrounded with such insulation materials as concrete, ceramics, plastics or porcelain. An advantage stated in the description is the low building height and large heat-exchange surface, because of false air. A disadvantage is that the matter concerns a single-thread exchanger, which is difficult to manufacture, with demanding shaping of the bellows ribs.

The above mentioned single-thread exchangers, which state a higher pressure loss and a smaller heat-exchange surface, are improved by EP 2 192 367 A2 (2009) with a multi-thread solution of heat-exchange surfaces. EP 2 192 367 describes a counterflow heat exchanger with the first through-flow channel through which the first liquid passes, and with the second through-flow channel through which the second through-flow liquid passes, where both the through-flow channels are created in a counterflow manner in the helical shape. The matter concerns a recuperative cylindrical heat exchanger, formed of several segments situated above each other. Each segment contains heat-exchange plates forming counterflow channels for liquids. According to the design example, each segment contains radially arranged circle sectors, between which the liquid flows. The liquid enter the heat exchanger axially and exits radially, which applies also for the second liquid flowing in the opposite direction. The liquid from the axial entry gradually enters to every segment separately, and in each segment it is conducted in a tangential direction. The patent description states advantages of this solution, namely quiet operation, compactness, efficiency and easy assembly. The tangential stream of the liquid in each segment is disrupted on the changing from one segment to another one. An advantage of this solution is that individual segments can be assembled into a preset length. A disadvantage is that the tangential flow is not continuous, which means that it can generate an added pressure loss, because the flow trajectory is not smooth. Another disadvantage may be formed of leakage between individual segments. It is possible to suppose that the drainage of condensate will be difficult, due to the difficult drainage of channels.

JP 2003 329 376 (2003) states a heat exchanger with a double pipe. The exchanger contains the external and internal tubes, where the internal tube is shaped into the helix shape for insertion into the external tube. A tape coiled into a thread is inserted into the internal tube. The upper part of the thread on the internal tube is put into a pressure contact with the internal circumferential surface of the external tube. One liquid flows through inside the internal tube, while the other liquid flows between the internal tube with a quantity of spiral channels and the external tube. The inlet and outlet of the liquids are arranged, according to the figures, perpendicularly to the longitudinal axis of the exchanger. The extremely simplified means from the manufacturing point of view with assurance of a good thermal efficiency are stated as an advantage.

CZ UV 22047 (2010) states a recuperative unit with a counterflow tubular heat exchanger consisting of the external and internal pipelines. The internal and external pipelines are not coaxial, but they are connected along the circumference. The internal pipeline forms a helix in the external pipeline, which is shaped in such a way, that in the places of the peaks of the helix arch, both the pipelines are in a line contact. This means that the internal pipeline is in a contact with the external pipeline, where the contact curve is a helix. One end of the internal pipeline forms the entry for the inlet of fresh air, and its other end forms the exit for the outlet of fresh air, which means, that fresh air flows inside through the internal pipeline. On the external pipeline, perpendicularly to the inlet for fresh air, the exit for the outlet of contaminated air is created, and perpendicularly to the exit for the outlet of contaminated air the entry for the inlet of contaminated air is created. This means that contaminated air flows through the area outlined between the internal and external pipes. This type of the exchanger features one heat-exchanger surface, namely the internal pipeline. The heat exchanger is intended for ventilating of internal areas and enables heat recuperation from the air exhausted.

WO 2011 079 483 (2011) describes a coaxial heat exchanger consisting of an external cylindrical pipe and an internal pipe coaxially inserted into the external pipe. Both the external and internal pipes are coaxial and connected along the circumference. The internal pipe features the main section, which is shaped into a multithread system of the helical internal pipe, which forms helical grooves between the internal and external pipes. The internal cross section of the heat exchanger is integral. Both the ends of the internal pipe are used as the inlet and outlet of the first liquid, and both the ends of the external pipe are used as the inlet and outlet of the second liquid. Both the inlet and outlet of the two liquids are situated perpendicularly towards the longitudinal axis of the heat exchanger. Heat transfer takes place only through the wall of the internal pipe, which therefore forms one heat-exchanger surface. As an advantage it is stated, that the heat exchanger is compact, its operation and assembly are comfortable and simple.

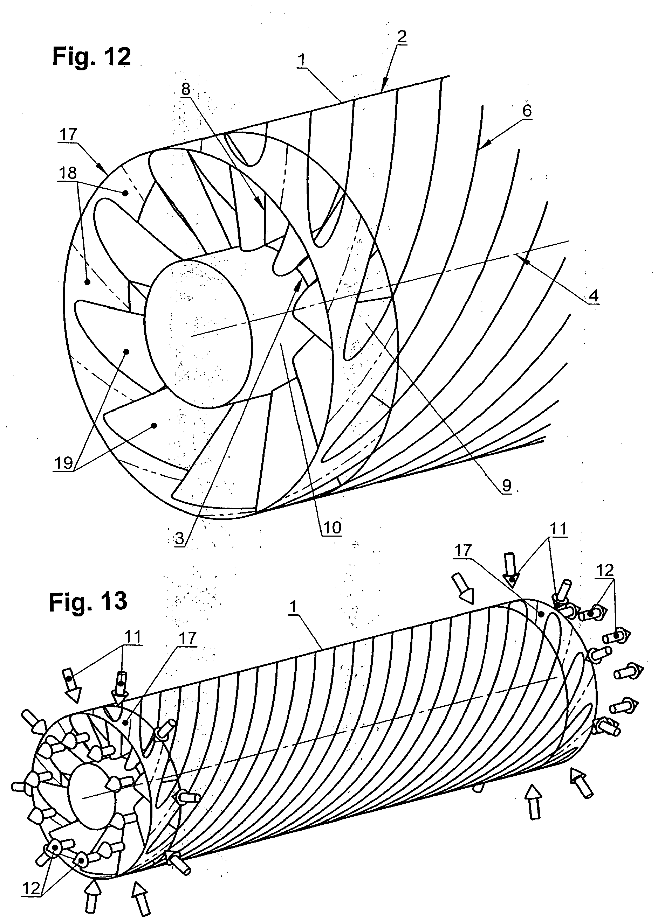

All three latest mentioned inventions feature a created helix, and even though it is not expressly described, it is possible to suppose a right-handed or left-handed helix, conducted under a certain angle. All these solutions feature the arrangement of the inlet and outlet of the medium in a radial way, perpendicularly to the longitudinal axis of the exchanger and always in one direction, except for CZ UV 20427, where fresh air has the arrangement of the inlet and outlet also perpendicularly to the longitudinal axis of the exchanger, but the contaminated air has the axial arrangement of the inlet and outlet. This means, that contaminated air flows through the internal pipe in the direction of the longitudinal axis of the exchanger. A disadvantage of all these solutions is only one heat-exchanger surface of the integral internal pipe/tube/pipeline. Another disadvantage is, that the channel of the internal pipe/tube/pipeline does not have an identical internal cross section, and furthermore, there is only one channel and it is continuous along its entire length. One heat-exchanger surface obviously simplifies the heat exchanger design, it is true, but it is possible to presuppose, that its efficiency will be relatively low. DE 10 2005 035 712 A1 (2007) describes counterflow cylindrical recuperative heat exchanger with multi-thread spiral-like coiled heat exchanger surfaces in 2-D curve in the one plane. Trajectory streamlines are straight-linear. Heat exchanger has distributor with internal and external separation surfaces arranged cylindrical, as the frontal external separation surfaces and lateral internal separation surfaces. WO 2008/052 493 A1 (2008) discloses a heat exchange with a core formed of coiled heat exchanger surfaces separated by a plurality of radial separating strips. These strips having a spiral form so as to define helical channels and also discloses annular distributor. Annular distributor has external separation surfaces arranged cylindrically as frontal external separation and lateral separation surfaces. Alternative embodiment of Fig. 12, 13 has outer cylindrical separating surfaces and inner separating surfaces rounded- curved towards to the longitudinal axis.

### Summary of the Invention

The above stated disadvantages shall be removed or substantially reduced for the counterflow cylindrical recuperative heat exchanger with multi-thread screw-like coiled heat exchanger surfaces, according to the preamble of claim 1 of the present invention. The subject matter of the present invention consists in the fact, the heat exchanger surfaces have screw-like shapes, where the right-handed or left-handed helix of the heat-transfer surface is coiled under the pitch angle, which is greater than 0° and smaller than 90° with regard to the longitudinal axis of the recuperative heat exchanger. The heat exchanger surfaces feature a shape, outlined with external edges, consisting of external helices on the external pipes and internal helices on the internal pipe. The counterflow cylindrical recuperative heat exchanger has annular distributor, and each annular distributor has the external separation surface and the internal separation surface in a conical shape of the truncated cone.

The main advantage of the counterflow cylindrical recuperative heat exchanger with screw-like coiled heat exchanger surfaces according to the present invention is, that it makes it possible to obtain even a small, inexpensive and affordable recuperative unit with non-demanding installation and a simple and clear control, with a long lifetime and with a simple and functional design. The counterflow arrangement of the heat exchanger allows a maximum efficiency of heat recovery. Recuperation saves, at a maximum level, e.g. costs of heating and reduces energy loss by ventilation. Due to the large quantity of the screw-like coiled heat-exchanger surfaces enables the start of turbulence of the flow of the medium and therefore also a more intensive heat transfer on the heat-exchanger surface. At the same time the recuperative heat exchanger states a low pressure loss, which leads to a lower energy consumption, e.g. for fans. The recuperative heat exchanger provides for a wide variability of heat-exchanger surfaces, thanks to the possible selection of various types of profiles. Due to the used shape of the heat-exchanger surfaces, the heat exchanger features an increased noise attenuation, e.g. from the street, which is ensured through multiple reflection of noise waves in the channels of the mediums. An advantage is the axial outlet of the medium, which efficiently ventilate the internal space. In terms of its tightness, the recuperative heat exchanger will reliably separate the mediums.

The presented invention solves an improving contact between two adjacent channels for leading both counterflow mediums, so as improving heat transfer efficacy. Helical flow helps and occurs turbulence and intensifies the heat transfer to heat exchange surfaces . Multi-thead coiled heat exchanger surfaces have the low pressure drop and so better heat transfer surfaces Annular distributor has external/internal separation surface, essentially in frontal arrangement. This design helps a safe and easy guidance of medium and separation of inlet/outlet channels.

In case of the most expected application of the recuperative heat exchanger according to this invention, i.e. into a ventilation device, it can be embedded into a cylindrical hole in the wall, or into a hole of a cylindrical shape in a wall, which cannot be used otherwise, and in this way it is possible to achieve a maximum use of this space. The other parts of the device can therefore remain as compact as possible, because the recuperative heat exchanger is symmetrical. In many cases it is possible to use the same follow-up parts on both the end distributors. In case of application of a ventilation device, an advantage is its affordability without any need of installation of expensive air distribution systems inside the building, and it is possible to use also inexpensive axial fans used in computers. In the case of ventilation, the matter concerns economically controlled ventilation of the room with fresh air and assurance of forced inlet as well as outlet of air into a ventilated room. The advantageous application of the recuperative heat exchanger according to the present invention into the ventilating device prevents moulds and ill building syndrome from developing, because it can dilute vapours from internal equipment and reduces excessive humidity. It also enables adjustability of the direction of flowing of inlet air to the place with a maximum necessity of ventilation. The fresh air inlet is separated from the space with consumed air.

For an easier production of the recuperative heat exchanger it is convenient, when individual heat-exchanger surfaces, and therefore also individual inlet and outlet channels of mediums, state a constant pitch of the helix.

It is also convenient, when individual heat-exchanger surfaces, and therefore also individual inlet arid outlet channels of the mediums, are mutually arranged in a regular angular spacing, and thus they outline the inlet and outlet channels of the mediums, which are identical in terms of their shapes in the cross section. An advantage is the same pressure loss of the recuperating heat exchanger in both the directions for the two mediums with identical physical characteristics.

It is also convenient, when the individual heat-exchanger surfaces and therefore also individual internal and external channels of mediums, are mutually arranged in an irregular angular spacing, and thus outline in the inlet and outlet channels of the mediums, which are different in terms of their shapes in the cross section. This solution is suitable for mediums of different physical characteristics.

It is also convenient, when the heat-exchanger surfaces are connected on their external and/or internal circumference with an external pipe and/or an internal pipe. An advantage may be the easy production of this recuperative heat exchanger or insert. The external or internal pipe ensures separation of both the mediums from themselves.

Furthermore, it is convenient, when the heat-exchanger surfaces are connected on the internal and external surface into an accordion-like insert, when always two neighbouring heat-exchanger surfaces are connected on the external cylindrical surface alternatively with the following two neighbouring heat-exchanger surfaces being connected on the internal cylindrical surface, and an internal pipe is inserted into the internal cylindrical surface, and an external pipe inserted onto the external cylindrical surface. An advantage of the accordion-like insert is its easy production in one whole. The counterflow cylindrical recuperative heat exchanger has end distributors, for the radial or semi-radial inlet of the medium and the axial outlet of the medium, with regard to the longitudinal axis of the recuperative heat exchanger. The distributor with the axial outlet enables an increased reach of the medium flow for better mixing of the medium, e.g. ventilation of air in the room. The radial inlet ensures evenness of the medium flow.

For a safer mutual separation of the inlet and outlet of mediums, each distributor is provided with an external separation surface and/or internal separation surface.

With an advantage it is possible to insert the external pipe, possibly the recuperative heat exchanger into a protective tube, whereby these structural elements are protected from damage, in particular during assembly.

The external pipe can be fitted with holes for condensate drainage, and the protective tube can be fitted with a means for collection of the condensate. The undesirable condensate can form at low temperatures of the heat-exchanger surfaces below the humid air dew point temperature and it is desirable to remove this condensate.

### Description of the Drawings

The invention is described below at a detailed level in the form of exemplary designs, which are clarified in a detailed way with the help of the attached schematic drawings, namely:
- Fig. 1: an axonometric view of the basic design parts of the recuperative heat exchanger with indication of the screw-like step-type heat-exchanger surface without distributors;
- Fig. 2: an axonometric view of the recuperative heat exchanger without distributors from Fig. 1, with the display of hidden edges;
- Fig. 3: a longitudinal vertical A-A section from Fig. 2;
- Fig. 4: an axonometric view of one of the ends of the recuperative heat exchanger and with arrows indicating directions of inlets and outlets of the mediums;
- Fig. 5: an axonometric view of one of the ends of the recuperative heat exchanger with the display of cross sections of the individual channels between the heat-exchanger surfaces;
- Fig. 6: an axonometric view of the insert of the recuperative heat exchanger, where heat-exchanger surfaces are firmly connected with the internal pipe;
- Fig. 7: an axonometric view of the insert of the recuperative heat exchanger, where heat-exchanger surfaces are firmly connected with the external pipe;
- Fig. 8: an axonometric view of the insert of the recuperative heat exchanger, where heat-exchanger surfaces are connected on diameters of the external and internal pipes in an accordion manner;
- Fig. 9: an axonometric view of the basic design parts of the recuperative heat exchanger with indication of the corkscrew heat-exchanger surface, without distributors;
- Fig. 10: an axonometric view of the recuperative heat exchanger without distributors from Fig. 9, with the display of hidden edges;
- Fig. 11: a longitudinal vertical B-B section from Fig. 10;
- Fig. 12: an axonometric view of a distributor not according to the invention;
- Fig. 13: an axonometric view of the heat exchanger with distributors from Fig. 12 and and therefore also individual inlet and outlet channels of the mediums with arrows indicating directions of inlets and outlets of the mediums;
- Fig. 14: an axonometric view of a distributor according to the invention;
- Fig. 15: an axonometric view of the distributor from Fig. 14 and with arrows indicating directions of inlets and outlets of the mediums;
- Fig. 16: an axonometric view of the application of the recuperative heat exchanger in the ventilation device embedded into the wall;
- Fig. 17: an axonometric view of the application of the recuperative heat exchanger in the ventilation device embedded into the wall, in a disassembled state of individual design elements;
- Fig. 18: corresponding to the display of Fig. 17, but with partly transparent design elements; and
- Fig. 19: a longitudinal vertical C-C section from Fig. 18, with partial through-views and with arrows indicating directions of inlets and outlets of the mediums,

### Examples of the Embodiment of Invention

### Example 1

### (Fig. 1, 2, 3, 4, 5)

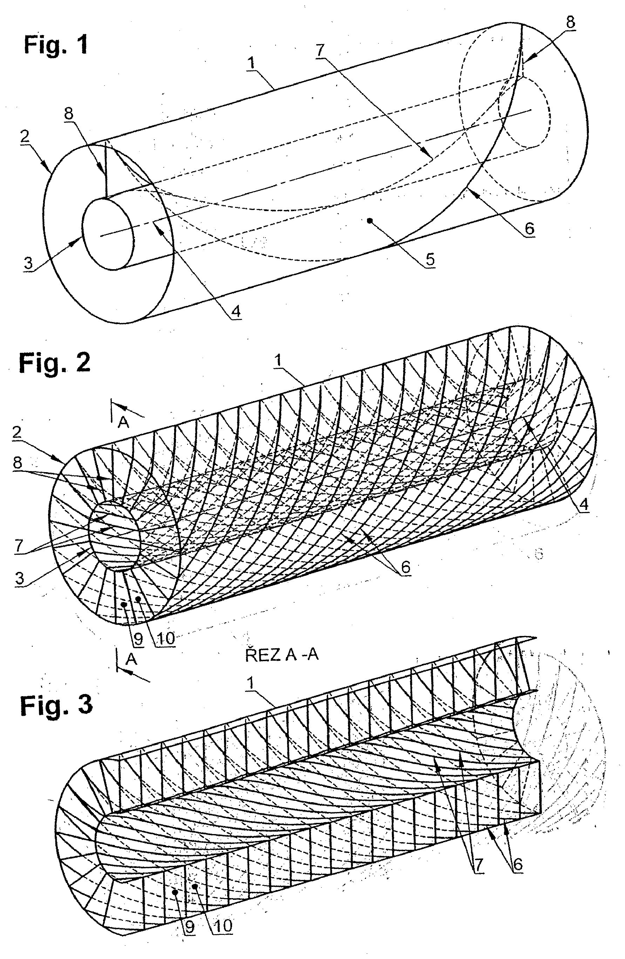

Fig. 1 illustrates the basic design elements of the cylindrical recuperative heat exchanger 1, namely the external pipe 2 and the internal pipe 3, which are coaxial in the longitudinal axis 4. For explanatory purposes, Fig. 1 illustrates one heat-exchanger surface 5, outlined with external edges consisting of an external helix 6 on the external pipe 2, of an internal helix 7 on the internal pipe 3, and on both ends of two straight-line profiles 8. This step-type heat-exchanger surface arises through geometric drawing of the straight-line profile 8 between the external and internal helices 6, 7.

Fig. 2 illustrates an axonometric view of the recuperative heat exchanger 1 from Fig. 1 at a more detailed way and with completion of the displays of other heat-exchanger surfaces 5 with both visible and hidden edges. The full line serves for the display of visible edges of the heat-exchanger surfaces 5, i.e. of both the external and internal helices 6, 7, and Weaker interrupted lines are used for the display of invisible edges of both the external and internal helices 6, 7. On the left end of the recuperative heat exchanger it is possible to see straight-line profiles 8 of individual heat-exchanger surfaces 5, separating the channels 9, 10 of counterflow mediums, e.g. air, and at the same time the inlet channels 9 and the outlet channels 10 are arranged side by side in an alternating manner.

Fig. 3 which illustrates the recuperative heat exchanger 1 in a longitudinal vertical axial section A-A from Fig. 2 shows in a clearer manner the internal arrangement of the recuperative heat exchanger, namely the internal and external helices 6, 7 and channels 9, 10 for the counterflow of the mediums.

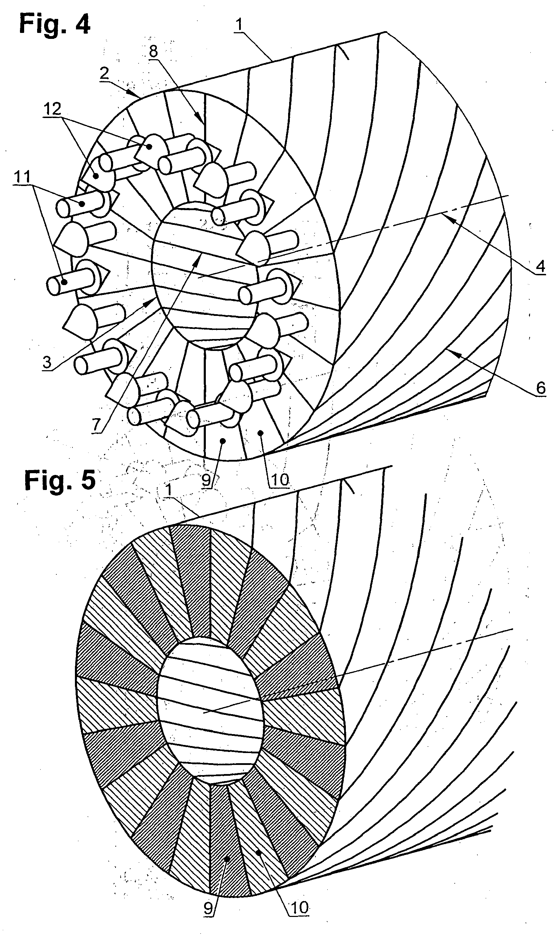

Fig. 4 illustrates a detail of one of the ends of the recuperative heat exchanger 1 from Fig. 2. On this detail it is possible to see the arrows indicating the inlets 11 of the medium and the outlets 12 of the medium.

Fig. 5 illustrates the same detail of one of the ends of the recuperative heat exchanger 1 from Fig. 2 where the cross sections of the inlet and outlet channels 9, 10 between the heat-exchanger surfaces 5 are hatched.

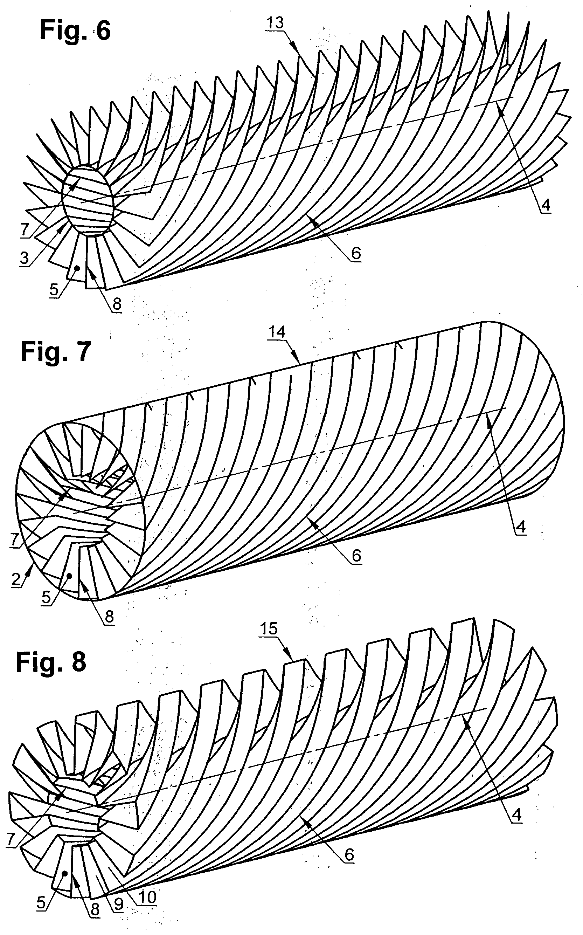

The other Figures 6, 7 and 8 illustrate inserts of various possible types of inserts 13, 14, 15 of the recuperative heat exchanger 1.

### Example 2

### (Fig. 6)

Fig. 6 illustrates, in an axonometric view, the insert 13 of the recuperative heat exchanger 1, where the heat-exchanger surfaces 5 are firmly connected with the firm internal pipe 3. This insert 13 is inserted into the non-illustrated separate external pipe 2, for creation of the closed channels 9, 10 for counterflow mediums. The insert 13 is suitable, e.g. for insertion into a circular air duct, for the reasons of saving of construction parts.

### Example 3

### (Fig. 7)

Fig. 7 illustrates, in an axonometric view, the insert 14 of the recuperative heat exchanger 1, where the heat-exchanger surfaces 5 are firmly connected with the firm external pipe 2. The non-illustrated separate internal pipe 3 is inserted into this insert 14 for safe creation of channels 9, 10 of the counterflow mediums. The whole composed in this manner can be inserted into the non-illustrated protective tube 21. It is easier to manufacture the insert 14 connected with the firm external pipe 2 than the previously described insert 13.

### Example 4

### (Fig. 8)

Another alternative type of the insert is the accordion-like insert 15, illustrated in the axonometric view in Fig. 8. The heat-exchanger surfaces 5 are connected, in an accordion way, into one integral whole, when always two neighbouring heat-exchanger surfaces 5 are connected on the external circumference, and the following two neighbouring heat-exchanger surfaces 5 are connected on the internal circumference of the accordion-like insert 15. The accordion-like insert 15 thus represents a shell body which can be easily manufactured e.g. by extrusion or injection moulding. The heat-exchanger surfaces 5 are connected, in an accordion way, on the internal and external surfaces of the accordion-like insert 15. The non-illustrated internal pipe 3 is inserted into the internal cylindrical area and the non-illustrated external pipe 2 is inserted onto the external cylindrical area, so that it can be possible to outline channels 9, 10 for the flow of the mediums.

### Example 5

### (Fig. 9, 10, 11)

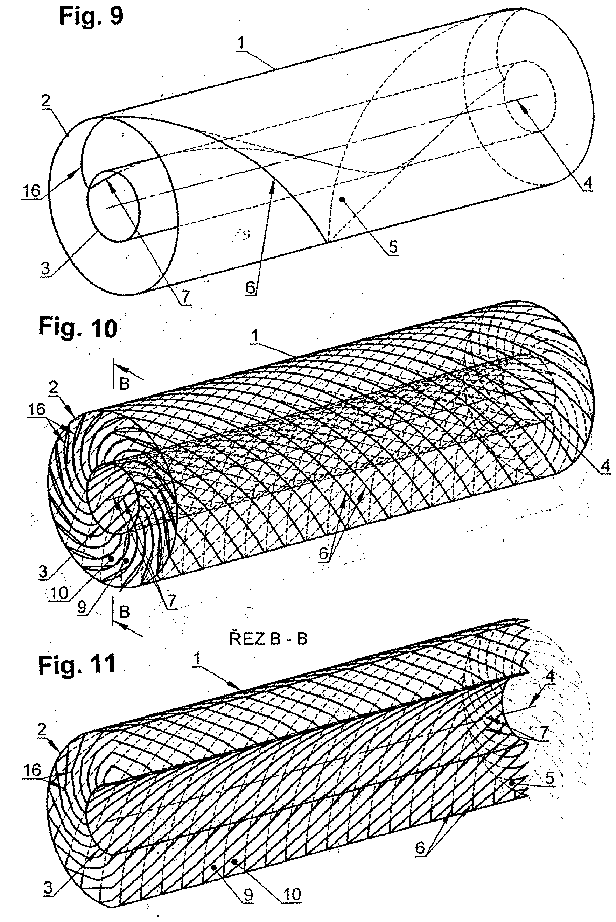

Fig. 9 illustrates the basic design elements of an alternative cylindrical counterflow recuperative heat exchanger 1. The external pipe 2 and the internal pipe 3 are coaxial in the longitudinal axis 4 of the recuperative heat exchanger 1. For the purpose of clarity, Fig. 9 illustrates one heat-exchange surface 5, outlined with four external edges, formed of the external helix 6 on the external pipe 2, internal helix 7 on the internal pipe 3 and on both the ends with two involute profiles 16. This corkscrew heat-exchanger surface arises through the geometric drawing of the involute profile 16 between the external helix 6 and internal helices 7.

Fig. 10 illustrates an axonometric view of the recuperative heat exchanger 1 from Fig. 9, in a more detailed way and with completion of illustration of other heat-transfer surfaces 5 with both visible and hidden edges. A full line is used for illustration of visible edges of external helices 6 as well as those of internal helices 7 and weaker interrupted lines are used for invisible edges of both external helices 6 and those of internal helices 7. On the left end of the recuperative heat exchanger 1 it is possible to see involute profiles 16 of individual heat-exchanger surfaces 5, separation channels 9,10 of counterflow mediums, e.g. of air, and the input channels 9 and output channels 10 are arranged next to each other in an alternating way.

Fig. 11, which illustrates the recuperative heat exchanger 1 in a longitudinal vertical B-B axial section from Fig. 10, shows the internal arrangement of the recuperative heat exchanger 1 in a clearer way, in particular the arrangement of the internal helix 6 and of the external helix 7, and of the inlet channel 9, and of the outlet channel 10 for the counterflow of the mediums.

An advantage of this solution is that it is quite easy to manufacture the heat-exchanger surfaces 5 from a flat foil by simply winding or bending it into the required shape. The corkscrew area can be developed.

### Example 6

### (Fig. 12, 13)

Another necessary design element for the right function of the recuperative heat exchanger 1 are distributors 17 situated on both its ends, which ensure the inlet 11 and outlet 12 of the counterflow mediums and prevent both mediums from undesirable contacts. Fig. 12 illustrates, in a detailed manner, an axonometric view of a distributor 17 of the recuperative heat exchanger 1 not according to the invention, with the internal pipe 2 and the external pipe 3. The function of the distributor 17 is to separate both the mediums at the inlet 11 and outlet 12 from themselves, which is ensured by the external separation surfaces 18 and internal separation surfaces 19. In the exemplary design, the external separation surface 18 is cylindrical and the internal separation surface is for example conical. The inlets 11 and outlets 12 can be exchanged between themselves without any change in functionality of the recuperative heat exchanger 1.

The inlets 11 of the mediums and the outlets 12 of the mediums on the distributors 17, of the same design as in the previous Fig. 12, are illustrated in Fig. 13. Fig. 13 illustrates an axonometric view of the heat exchanger 1 with distributors 17 on which visible arrows indicate the directions of inlets 11 and outlets 12 of the mediums. In this exemplary design, Fig. 13 shows the inlets 11 of internal air and outlets 12 of external air on the left distributor 17. As far as the right distributor 17 is concerned, Fig. 13 illustrates the inlets 11 of external air and outlets 12 of internal air. This solution is less demanding for production from the constructional point of view.

### Example 7

### (Fig. 14, 15)

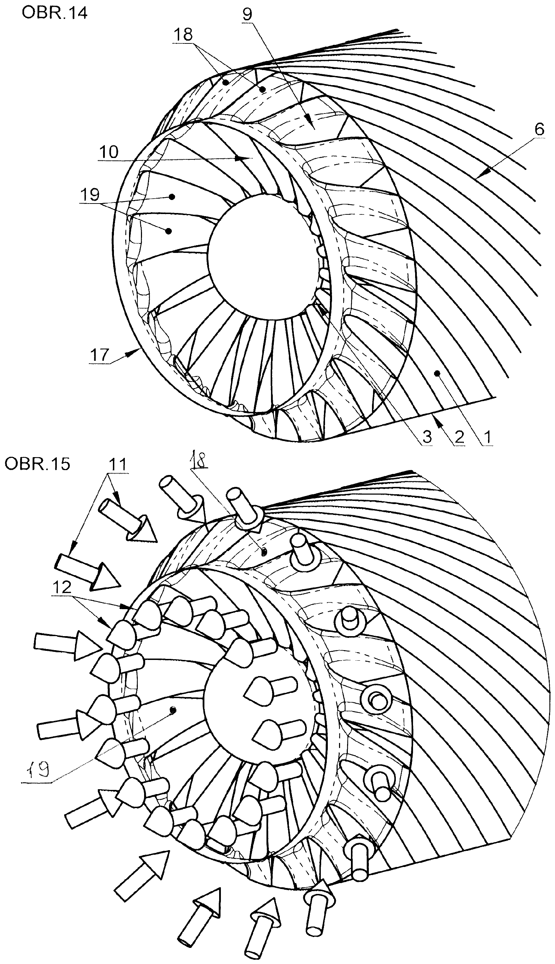

Fig. 14, 15 illustrate an axonometric view of a distributor 17 according to the invention. The distributor 17 differs from the previous exemplary design 6 in Fig. 12 and Fig. 13 by having different external separation surfaces 18 in the conical shape. The inlets of the medium 11 are conducted in a semi-radial direction, unlike the previous design. An advantage of this solution is a more fluent inlet of the medium with a less pressure loss and a better use of the heat-exchanger surfaces for the sharing of heat in comparison with the previous exemplary solution.

### Example 8

### (Fig. 16, 17, 18, 19)

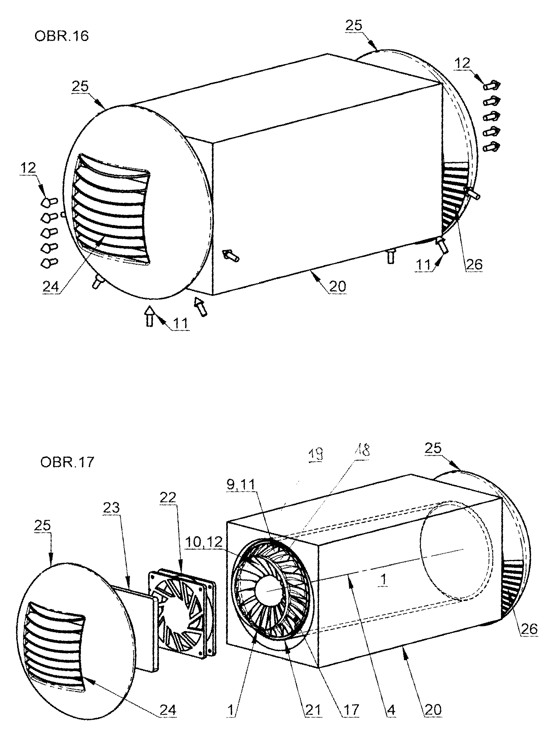

One of the possible particular applications of the recuperative heat exchanger 1 according to previous examples of the design is provided for in the present Example 8. This application is illustrated in Fig. 16, 17, 18, 19. The application concerns a recuperative heat exchanger 1 in the ventilating device, which is embedded in the wall 20.

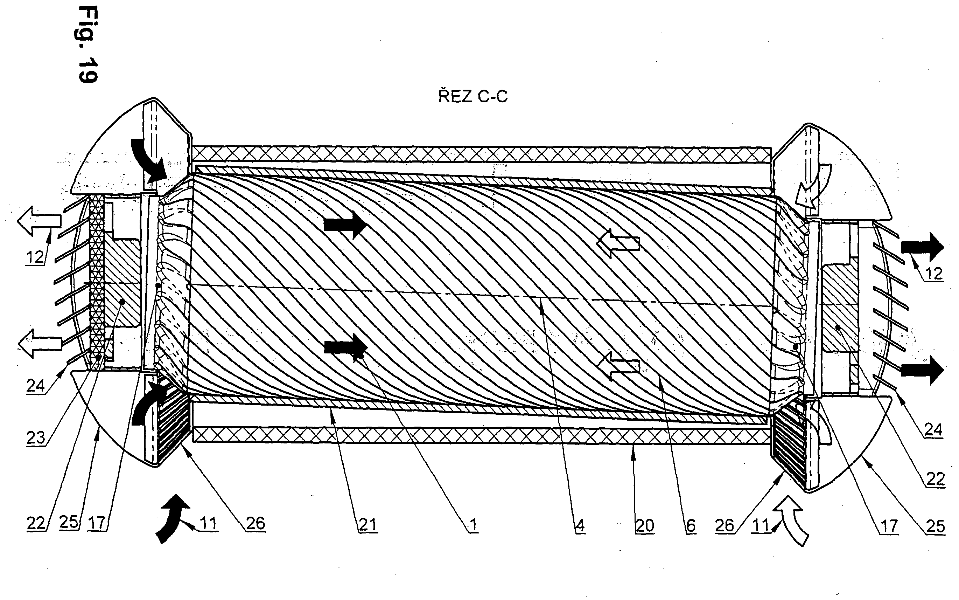

The ventilating device in the assembled condition is schematically illustrated in Fig. 16 in the axonometric view and in Fig. 19 in the longitudinal vertical C-C section from Fig. 16.

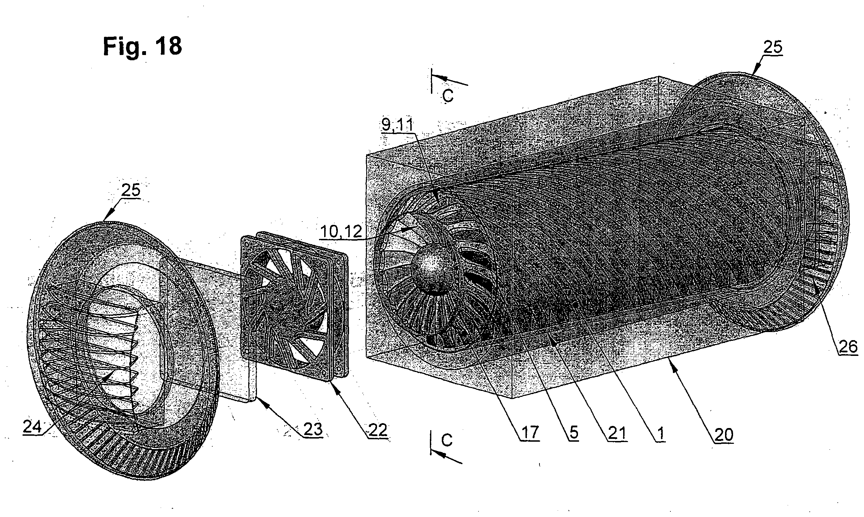

The ventilating device in the disassembled condition, divided into basic design elements is illustrated in Fig. 17, 18.

Visible arrows in Fig. 16 and 19 indicate the directions of the flows of the mediums. The ventilating device is composed of the basic design elements, which are the recuperative heat exchanger 1 with end distributors 17, embedded into the external protective tube 21, which is installed into the wall 20. The right-hand end distributor 17 is facing towards the external side of the building, while the left-hand distributor 17 is facing towards the internal area of the building. Each of the distributors 17 is followed up by the fan 22, which ensures in an axial direction the outlet 12 of the medium from the recuperative heat exchanger 1. The fan 22 can be advantageously followed up by the filter 23, which ensures filtration of the medium, e.g. the air flowing into the room. The filter 23 is followed up by exhaust grille 24 installed in the head 25. The suction grille 26 is installed in the lower part of the head 25.

The ventilating device works in the following way:
The outdoor fresh air is sucked in a radial way from bottom through the suction grille into the right-hand head 25 and enters through the right-hand distributor 17 along the circumference in a radial way into the recuperative heat exchanger 1, where the heat is shared through the heat-exchanger surfaces 5. Subsequently, the outdoor air exits from the recuperative heat exchanger 1 through the left-hand distributor 17 in an axial direction, and is sucked in by the axial fan 22, which subsequently exhausts it through the filter 23 and the exhaust grille 24 into the room in the building. The internal contaminated air continues analogously in the same in an opposite direction. This means that it is drawn in radially, from the bottom side, through the suction grille 26 into the left-hand head 25, and enters through the left-hand distributor 17 along the circumference in a radial way into the recuperative heat exchanger 1, where the heat is shared through the heat-exchanger surfaces 5. Subsequently, the internal air exits from the recuperative heat exchanger 1 through the right-hand distributor 17 in an axial direction, and is sucked in by the axial fan 22, which subsequently exhausts it through the exhaust grille 24 outside the building.

The exemplary designs are not limiting and other variants and combinations within the framework of the extent of the patent claims are possible as well.

It is clear from the previous exemplary designs that the inlets 11 of the medium are arranged radially, and in exceptional cases, such as in the case of the exemplary design 7 in a semi-radial manner. Or in the case of an exchange of the inlets 11 for the outlets 12, the inlets 11 are arranged axially in the annular distributor 17.

The outlets 12 of the medium are arranged in an axial manner in the annular area between the external pipe 2 and the internal pipe 3. If the flow directions are inversed, the inlets 11 become the outlets 12 and vice versa, and then the outlet 12 is arranged in a radial way along the entire circumference of the external pipe 2.

The heat-exchanger surfaces 5 are screw-like coiled between the external pipe 2 and the internal pipe 3 and are arranged in a radial manner along the longitudinal axis 5 of the recuperative heat exchanger 1. The heat-exchanger surfaces 5 can feature a shape of the surface arising by drawing a forming straight-line profile 8 or an involute profile 16 along the helix, where the profiles 8, 16 have always one shape, in the transverse section perpendicular to the longitudinal axis 4 of the recuperative heat exchanger 1. The profiles 8, 16 can have the shape corresponding to a part of the straight line, as it is the case in the exemplary design 1 (Fig. 1, 2, 3, 4, 5) or an involute, as it is the case in the exemplary design 5 (Fig. 9, 10, 11). The profile can have also the shape of a part of a circle, helix, involute, parabola, hyperbola, etc.

Each heat-exchanger surface 5 of the recuperative heat exchanger 1 has each of the helices 6, 7 either right-handed or left-handed. A left-handed helix 6, 7 is stated in the exemplary designs 1 (Fig. 1, 2, 3, 4, 5), in Example 2 (Fig. 6), in Example 3 (Fig. 7), in Example 4 (Fig. 8) and in Example 6 (Fig. 12, 13). A right-handed helix 6, 7 is stated in the exemplary designs 5 (Fig. 9, 10, 11) and in Example 7 (Fig. 14, 15).

Each helix 6, 7 is coiled under the angle, which is greater than 0° and smaller than 90° with regard to the longitudinal axis 4 of the recuperative heat exchanger 1. In all exemplary designs, the external helix 6 on the external pipe 2 can be coiled e.g. under the angle of 45°, and the internal helix 7 on the internal pipe 3 is coiled e.g. under the angle of 20°. The angles of coiling of the helices 6, 7 can be selected according to the requirements of a particular design for production or use. The coiling angle of the helix 6, 7 is different on the external pipe 2 and on the internal pipe 3, because the pitch of the two helices is identical. This means that the pitch angle of the external helix 6 on the external pipe 2 is greater than the pitch angle of the internal helix 7 on the internal pipe 3.

The shape of the channels 9, 10 for the flowing of mediums is advantageously narrower at the internal pipe 3 and wider at the external pipe 2, as it is stated in the case of examples of design 1 (Fig. 2, 3, 4, 5), which means that the inlet channels 9 and the outlet channels 10 feature different shapes in the cross section, in terms of the size of the cross section diameter along the length in the longitudinal axis 4 of the recuperative heat-exchanger 1.

Or, according to the exemplary design 5 (Fig. 9, 10, 11), the spacing between the heat-exchanger surfaces 5 is constant, and then both the inlet channels 9 and outlet channels 10 are identical in the cross section in terms of their shape along the entire length in the longitudinal axis 4 of the recuperative heat-exchanger 1.

In the exemplary designs 6 (Fig. 12, 13) and 7 (Fig. 14, 15), two possible types of distributors 17 are stated, while only the distributor of exemplary design 7 is according to the invention. It is possible to use also another suitable design solution of the distributors 17, or it is possible to create the distributor 17 by means of a minimum design modification from the recuperative heat exchanger 1 or inserts. For example, in such a manner that on one end of the distributor 17, for inserts 13, 14, 15 the odd channels 9 will be blinded and radial holes for the inlet 11 of the medium will be created at them; and then even channels 10 create the outlet 12 of the medium by themselves. On the opposite end of the distributor 17, for inserts 13, 14, 15 the even channels 10 will be blinded and radial holes for the inlet 11 of the medium will be created at them; and then odd channels 10 create the outlet 12 of the medium by themselves.

### Industrial Applicability

The solution with a forced through-flow of mediums is intended for recovery of energy for the systems designed especially for ventilation, as an air-handling element of the ventilation system, maintaining heat or cooling condition in the room at ventilation in the buildings and also in technological processes, for example for the preheating of the medium with the use of heat from flue gases, etc. The recuperative heat exchanger 1 can be used also in other industrial applications, e.g. in the automotive industry and everywhere, where it is necessary to exchange heat between the mediums.

### Relational marks

1 recuperative heat exchanger
2 external pipe
3 internal pipe
4 longitudinal axis
5 heat-exchanger surface
6 external helix
7 internal helix
8 straight-line profile
9 inlet channel
10 outlet channel
11 inlet of the medium
12 outlet of the medium
13 insert 13 with the internal firm pipe 3
14 insert 14 with the external firm pipe 2
15 accordion-like insert
16 involute profile
17 distributor
18 external separation area
19 internal separation area
20 wall
21 external protective tube
22 fan
23 filter
24 exhaust grille
25 head
26 suction grille

## Claims

1. A counterflow cylindrical recuperative heat exchanger with multi-thread screw-like coiled heat exchanger surfaces, designed especially for ventilating devices, including inlet (11) for one medium and outlets (12) for a counterflow second medium, wherein one medium is fresh air and the counterflow second medium is contaminated air, wherein, if the flow directions are inversed, the medium inlets (11) become the medium outlets (12) and the medium outlets (12) become the medium inlets (11); and an external pipe (2) with a coaxially arranged internal pipe (3), between which heat exchanger surfaces (5) are situated in screw-like shapes, wherein both ends of the recuperative heat exchanger (1) being fitted with annular distributors (17) for the inlets (11) of one medium into inlet channels (9) and outlets (12) of the counterflow medium into outlet channels (10); and
each annular distributor (17) defining the inlets (11) for one medium and the outlets (12) for the counterflow medium, and each annular distributor (17) is provided with external separation surfaces (18) and internal separation surfaces (19) for separation of the inlet channels (9) and outlet channels (10) of both counterflow mediums, wherein a number of external separation surfaces (18) is equal to the number of internal separation surfaces (19), which is equal with number of inlet channels (9) or outlet channels (10), where the inlet channels (9) and the outlet channels (10) are arranged side by side in an alternating manner,
a plurality of inlets (11) of the one medium are arranged in a radial way or in a semi-radial way on the end annular distributor (17), radially with regard to the longitudinal axis (4) of the recuperative heat exchanger (1), and following up to the inlet channels (9) arranged between the external pipe (2) and the internal pipe (3) for the flow of the one medium;
a plurality of outlets (12) of the counterflow second medium are directed in an axial way on the end annular distributor (17), and distributed radially with regard to the longitudinal axis (4) of the recuperative heat exchanger (1), and following up to the outlet channels (10) for the flow of the counterflow second medium; the heat-exchanger surfaces (5) are mutually separated, coaxial, multithread screw-like coiled between the external pipe (2) and the internal pipe (3) and outline the mutually separated inlet channels (9) and outlet channels (10) for the flow of both counterflow mediums, and the heat-exchanger surfaces (5) and therefore also the inlet channels (9) and outlet channels (10) are arranged radially around the longitudinal axis (4) of the recuperative heat exchanger (1); and
the profile (8, 16) of the heat exchanger surfaces features one shape, in the transverse section perpendicular to the longitudinal axis (4) of the recuperative heat exchanger (1), from the group including parts of a straight line, circle, helix, involute, parabola and hyperbola wherein the heat exchanger surfaces (5) have screw-like shapes, wherein the right-handed or left-handed helix (6, 7) of the heat-transfer surface (5) is coiled under the pitch angle, which is greater than 0° and smaller than 90° with regard to the longitudinal axis (4) of the recuperative heat exchanger (1); the heat exchanger surfaces (5) feature a shape, outlined with external edges, consisting of external helices (6) on the external pipes (2) and internal helices (7) on the internal pipe (3); and
each annular distributor (17) has the external separation surface (18) and the internal separation surface (19) in a conical shape of a truncated cone.

2. The counterflow cylindrical recuperative heat exchanger according to claim 1, **characterised by the fact that** the external helix (6) on the external pipe (2) is coiled under the angle of 45° with regard to the longitudinal axis (4) of the recuperative heat exchanger (1), and the internal helix (7) on the internal pipe (3) is coiled under the angle of 20° with regard to the longitudinal axis (4) of the recuperative heat exchanger (1).

3. The counterflow cylindrical recuperative heat exchanger according to claim 1, **characterised by the fact that** the individual heat-exchanger surfaces (5), and therefore the inlet channels (9) and outlet channels (10) feature a constant pitch of the helix (6, 7).

4. The counterflow cylindrical recuperative heat exchanger according to claim 1, **characterised by the fact that** the individual heat-exchanger surfaces (5) are arranged mutually in a regular angular spacing, and thus they outline the inlet channels (9) and outlet channels (10) that are identical in terms of their shape in the cross section.

5. The counterflow cylindrical recuperative heat exchanger according to claim 1, **characterised by the fact that** the individual heat-exchanger surfaces (5) are arranged mutually in an irregular angular spacing, and thus they outline the inlet channels (9) and outlet channels (10) that are different in terms of their shape in the cross section.

6. The counterflow cylindrical recuperative heat exchanger according to claim 1, **characterised by the fact that** the heat-exchanger surfaces (5) are connected on their external and/or internal circumference, with the external pipe (2) and/or with the internal pipe (3).

7. The counterflow cylindrical recuperative heat exchanger according to claim 1, **characterised by the fact that** the heat-exchanger surfaces (5) are connected on their internal and external surface into an accordion-type insert (15), and always two neighbouring heat-exchanger surfaces (5) on the external cylindrical surface and the following two heat-exchanger surfaces (5) on the internal cylindrical surface are alternatively connected, and the internal pipe (3) is inserted into the internal cylindrical surface, and the external tube (2 4) is inserted onto the external cylindrical surface.

8. The counterflow cylindrical recuperative heat exchanger according to claim 1, **characterised by the fact that** the external pipe (2) is inserted into a protective tube (21), which is provided with holes for condensate drainage and the protective tube (21) is provided with a means for condensate collection.

## Patentansprüche

1. Der zylindrische rekuperative Gegenstromwärmeaustauscher mit mehrgängigen, schraubenförmig gewundenen Wärmeaustauscheroberflächen, insbesondere bestimmt für Belüftungsvorrichtungen, umfasst
die Zuläufe (11) eines Mediums und die Ausgänge (12) des entgegengesetzt strömenden zweiten Mediums, wobei ein Medium die Frischluft und das entgegengesetzt strömende zweite Medium verunreinigte Luft darstellt, während wenn die Strömungsrichtungen umgedreht werden, die Zuläufe (11) des Mediums so zu den Ausgängen (12) des Mediums und die Ausgänge (12) des Mediums zu den Zuläufen (11) des Mediums werden; und das Außenrohr (2) mit symmetrisch angeordnetem Innenrohr (3), zwischen denen Wärmeaustauschflächen (5) schraubenförmig angeordnet sind, wobei beide Enden des rekuperativen Wärmeaustauschers (1) mit kreisringförmigen Verteilern (17) für die Zuläufe (11) des einen Mediums in die Zulaufkanäle (9) und Ausgänge (12) des entgegengesetzt strömenden Mediums in die Auslasskanäle (10) bestückt sind; und
jeder kreisringförmige Verteiler (17) definiert die Zuläufe (11) für ein Medium und die Ausgänge (12) für das entgegengesetzt strömende Medium und jeder kreisringförmige Verteiler (17) verfügt über äußere Trennflächen (18) und über innere Trennflächen (19) zur Trennung der Zulaufkanäle (9) und Ausgangskanäle (10) der beide entgegengesetzt strömenden Medien , dabei stimmt die Anzahl der äußeren Trennfläche (18) mit der Anzahl der inneren Trennfläche (19) überein, die Anzahl von Zulaufkanäle (9) ist gleich der Anzahl der Ausgangskanäle (10), wobei die Zulaufkanäle (9) und die Auslasskanäle (10) abwechselnd nebeneinander angeordnet sind,
die Pluralität der Zulaufkanäle (11) des einen Mediums, die radial ggf. semiradial am Ende des kreisringförmigen Verteilers (17), und radial zur Längsachse (4) des rekuperativen Wärmeaustauschers (1) angeordnet sind, und sich in die Zulaufkanäle (9) fortsetzen, die zwischen dem äußeren Rohr (2) und dem Innenrohr (3) für den Durchlauf eines Mediums angeordnet sind;
die Pluralität von Auslässen (12) des entgegengesetzt strömenden zweiten Mediums, werden axial zum Ende des kreisringförmigen Verteilers (17) geführt, diese werden radial verteilt, dies aufgrund der Längsachse (4) des rekuperativen Wärmeaustauschers (1) und führen dann zu den Auslasskanälen (10) für die Strömung des entgegengesetzt strömenden zweiten Mediums;
die Wärmeaustauschflächen (5) sind voneinander getrennt, symmetrisch, koaxial, mehrgängig schraubenförmig zwischen dem Außenrohr (2) und Innenrohr (3) gewunden, und diese grenzen die gegenseitig voneinander getrennten Zulaufkanäle (9) und Auslasskanäle (10) für die entgegengesetzt strömenden Medien ab, und die Wärmeaustauschflächen (5) und damit auch die Zulaufkanäle (9) und Auslasskanäle (10) sind radial um die Längsachse (4) des rekuperativen Wärmeaustauschers (1) angeordnet; und
das Profil (8,16) der Wärmeaustauschflächen verfügt über eine Form im Querschnitt senkrecht zur Längsachse (4) des rekuperativen Wärmeaustauschers (1), aus der Gruppe, die einen Teil der geraden Linie, des Kreises, der Spirale, der Evolvente, der Parabel und Hyperbel miteinschließt;
**wo**
die Wärmeaustauschflächen (5) die Form der Helix haben, wo die rechtsdrehende oder linksdrehende Helix (6, 7) der Wärmeaustauschflächen (5) in einem Steigungswinkel von größer als 0°
und kleiner als 90° zur Längsachse (4) des rekuperativen Wärmeaustauschers (1) gewunden sind;
die Wärmeaustauschflächen (5) werden durch die Außenkanten begrenzt, die von der äußeren Helix (6) an den äußeren Rohren (2) und der inneren Helix (7) an dem Innenrohr (3), gebildet werden, und
jeder kreisringförmige Verteiler (17) verfügt über eine äußere Trennfläche (18) und eine innere Trennfläche (19) von konischer Form des Kegelstumpfes.

2. Der zylinderförmige rekuperative Gegenstromwärmeaustauscher nach Anspruch 1,
**dadurch gekennzeichnet, dass** die Außenhelix (6) auf dem Außenrohr (2) in einem Winkel von 45° zur Längsachse (4) des rekuperativen Wärmeaustauschers (1) und die Innenhelix (7) auf dem Innenrohr (3) in einem Winkel von 20° zur Längsachse (4) des rekuperativen Wärmeaustauschers (1) gewunden ist.

3. Der zylinderförmige rekuperative Gegenstromwärmeaustauscher nach Anspruch 1,
**dadurch gekennzeichnet, dass** die einzelnen Wärmeaustauschflächen (5) und somit die Zulaufkanäle (9) und Auslasskanäle (10) eine konstante Steigung der Helix (6, 7) besitzen.

4. Der zylinderförmige rekuperative Gegenstromwärmeaustauscher nach Anspruch 1,
**dadurch gekennzeichnet, dass** die einzelnen Wärmeaustauschflächen (5) gegenseitig in regelmäßigem winkligen Abstand angeordnet sind und diese so die im Querschnitt hinsichtlich der Form identischen Zulaufkanäle (9) und Ausgangskanäle (10), die hinsichtlich der Form im Querschnitt identisch sind, abgrenzen.

5. Der zylinderförmige rekuperative Gegenstromwärmeaustauscher nach Anspruch 1,
**dadurch gekennzeichnet, dass** die einzelnen Wärmeaustauschflächen (5) gegeneinander in unregelmäßigen Winkelabständen angeordnet sind und in der Querschnittsform die unterschiedlichen Zulaufkanäle (9) und Auslasskanäle (10) abgrenzen.

6. Der zylinderförmige rekuperative Gegenstromwärmeaustauscher nach Anspruch 1,
**dadurch gekennzeichnet, dass** die Wärmeaustauschflächen (5) am Außen- und/ oder Innenumfang mit dem Außenrohr (2) und/oder Innenrohr (3) verbunden sind.

7. Der zylinderförmige rekuperative Gegenstromwärmeaustauscher nach Anspruch 1,
**dadurch gekennzeichnet, dass** die Wärmeaustauschflächen (5) an der inneren und äußeren Oberfläche am gefalteten Einsatz (15) verbunden sind, wobei abwechselnd immer zwei benachbarte Wärmeaustauschflächen (5) auf der äußeren zylindrischen Oberfläche und die folgenden zwei benachbarten Wärmeaustauschflächen (5) auf der inneren zylindrischen Oberfläche verbunden sind, wobei in der innere zylindrische Oberfläche das Innenrohr (3) und an der äußeren zylindrischen Oberfläche das Außenrohr (2) eingesetzt ist.

8. Der zylinderförmige rekuperative Gegenstromwärmeaustauscher nach Anspruch 1,
**dadurch gekennzeichnet, dass** das Außenrohr (2) in das Schutzrohr (21) eingesetzt ist, das über Öffnungen für die Abführung des Kondensates verfügt, wobei das Schutzrohr (21) über Elemente zur Kondensat-Sammlung verfügt.

## Revendications

1. Echangeur de chaleur à récupération cylindrique à écoulement à contre-courant doté de surfaces d'échangeur de chaleur enroulées en forme de vis à filetage multiple conçu pour des dispositifs de ventilation, incluant les
entrées (11) d'un médium et les sorties (12) d'un deuxième médium à écoulement à contre-courant, où un médium est de l'air frais et le deuxième médium à écoulement à contre-courant est de l'air pollué, les entrées (11) du médium devenant des sorties (12) de médium et les sorties (12) de médium devenant des entrées (11) de médium si les sens des courants se retournent;
ayant un tube extérieur (2) avec un tube interne de structure coaxiale (3), entre lesquels sont situées les surfaces d'échangeur de chaleur (5) en forme de vis, les deux extrémités de l'échangeur de chaleur à récupération (1) étant munies d'un anneau de distributeurs (17) pour les entrées (11) d'un médium dans les canaux d'entrée (9) et les sorties (12) du médium à écoulement à contre-courant dans les canaux de sortie (10); et
chacun des anneaux de distributeur (17) délimitant les entrées (11) pour un médium et les sorties (12) pour le médium à écoulement à contre-courant, et chaque anneau du distributeur (17) étant muni de surfaces de séparation extérieures (18) et de surfaces de séparation intérieures (19) pour la séparation des canaux d'entrée (9) et des canaux de sortie (10) des deux médiums à écoulement à contre-courant, le nombre des surfaces de séparation extérieures (18) étant similaire au nombre des surfaces de séparation intérieures (19), qui est similaire au nombre des canaux d'entrée (9) ou des canaux de sortie (10), les canaux d'entrée (9) et canaux de sortie (10) étant disposés alternativement les uns à côté des autres,
la pluralité des entrées (11) d'un médium, disposées de manière radiale le cas échéant semi-radiale sur l'extrémité de l'anneau du distributeur (17), et radialement par rapport à l'axe longitudinal (4) de l'échangeur de chaleur à récupération (1), et continuant dans les canaux d'entrée (9) disposés entre le tube extérieur (2) et le tube intérieur (3) pour l'écoulement d'un médium;
la pluralité des sorties (12) du deuxième médium à écoulement à contre-courant étant menées axialement à l'extrémité de l'anneau du distributeur (17), étant distribuées radialement par rapport à l'axe longitudinal (4) de l'échangeur de chaleur à récupération (1) et continuant dans les canaux de sortie (10) pour le flux du deuxième médium à écoulement à contre-courant;
les surfaces d'échange de chaleur (5) étant mutuellement séparées, coaxiales, à pas multiples, enroulées en forme de vis entre le tube extérieur (2) et le tube intérieur (3), et délimitant mutuellement les canaux d'entrée séparés (9) et les canaux de sortie (10) pour le flux des deux médiums à écoulement à contre-courant, et les surfaces d'échange de chaleur (5) et, donc, également les canaux d'entrée (9) et les canaux de sortie (10) étant disposés radialement autour de l'axe longitudinal (4) de l'échangeur de chaleur à récupération (1); et
le profil (8,16) des surfaces d'échange de chaleur ayant une forme, dans une section transversale perpendiculaire à l'axe longitudinal (4) de l'échangeur de chaleur à récupération (1), d'un groupe incluant des parties de ligne droite, de cercle, de spirale, de développante, de parabole et d'hyperbole;
**où**
les surfaces d'échange de chaleur (5) ont des formes d'hélice, où l'hélice à rotation droite ou à rotation gauche (6, 7) de la surface d'échange de chaleur (5) est enroulée sous un angle de montée, supérieur à 0 ° et inférieur à 90 ° par rapport à l'axe longitudinal (4) de l'échangeur de chaleur à récupération (1);
les surfaces d'échange de chaleur (5) étant délimitées par les bords extérieurs, formés d'hélices extérieures (6) sur le tube extérieur (2) et d'hélices intérieures (7) sur le tube intérieur (3), et
chaque anneau de distributeur (17) ayant une surface de séparation extérieure (18) et une surface de séparation intérieure (19) en forme conique de cône tronqué.

2. Echangeur de chaleur à récupération cylindrique à écoulement à contre-courant selon la revendication 1, **se caractérisant par le fait que** l'hélice extérieure (6) sur le tube extérieur (2) est enroulée sous un angle de 45° par rapport à l'axe longitudinal (4) de l'échangeur de chaleur à récupération (1) et l'hélice intérieure (7) sur le tube intérieur (3) est enroulée sous un angle de 20 ° par rapport à l'axe longitudinal (4) de l'échangeur de chaleur à récupération (1).

3. Echangeur à récupération cylindrique à écoulement à contre-courant selon la revendication 1, **se caractérisant par le fait que** individuele surface d'échange de chaleur (5) et donc canal d'entrée (9) et canal de sortie (10) fait apparaître une montée constante de l'hélice (6, 7).

4. Echangeur à récupération cylindrique à écoulement à contre-courant selon la revendication 1, **se caractérisant par le fait que** individuele surface d'échange de chaleur (5) est disposée mutuellement dans un écart d'angle régulier et délimitant ainsi dans la section des canaux d'entrée (9) et des canaux de sortie (10) de forme similaire, qui sont identiques dans leur forme dans la section transversale.

5. Echangeur à récupération cylindrique à écoulement à contre-courant selon la revendication 1, **se caractérisant par le fait que** individuele surface d'échange de chaleur (5) est disposée mutuellement dans un écart d'angle irrégulier et délimitant dans la section les canaux d'entrée (9) et canaux de sortie (10) de forme différente.

6. Echangeur à récupération cylindrique à écoulement à contre-courant selon la revendication 1, **se caractérisant par le fait que** les surfaces d'échange de chaleur (5) sont reliées sur leur pourtour extérieur et/ou intérieur par un tube extérieur (2) et/ou un tube intérieur (3).

7. Echangeur à récupération cylindrique à écoulement à contre-courant selon la revendication 1, **se caractérisant par le fait que** les surfaces d'échange de chaleur (5) sont reliées sur la surface intérieure et extérieure dans une garniture en accordéon (15), deux surfaces d'échange de chaleur (5) voisines étant toujours alternativement reliées sur la surface cylindrique extérieure et les deux surfaces d'échange de chaleur (5) voisines suivantes sur la surface cylindrique intérieure, le tube intérieur étant inséré dans la surface cylindrique intérieure (3) et le tube extérieur (2) étant inséré sur la surface cylindrique extérieure.

8. Echangeur à récupération cylindrique à écoulement à contre-courant selon la revendication 1, **se caractérisant par le fait que** le tube extérieur (2) est inséré dans un tube de protection (21), muni d'orifices pour l'évacuation du condensat, le tube de protection (21) étant muni de produits pour la collecte du condensat.
